# EUROPEAN PATENT SPECIFICATION

(11) **EP 3 205 987 B1**
(45) Date of publication and mention of the grant of the patent: **23.12.2020**
(21) Application number: 17155599.8
(22) Date of filing: 10.02.2017
(51) Int. Cl.: G01F 23/26, G01F 22/00, G01F 23/00

(54) **SENSOR SYSTEMS AND METHODS**
SENSORSYSTEME UND -VERFAHREN
PROCÉDÉ ET SYSTÈME DE CAPTEURS

(30) Priority: 15.02.2016 US 201662295289 P
(43) Date of publication of application: 16.08.2017
(73) Proprietor: Simmonds Precision Products, Inc., Vergennes, VT 05491 (US)
(72) Inventor: Brown, Rollin W., South Burlington, Vermont 05403 (US); Bellinger, Mark, Cornwall, Vermont 05753 (US)
(74) Representative: Dehns

(56) References cited:
- EP-A1- 0 386 965
- EP-A2- 2 982 943
- US-A- 4 677 305
- US-A1- 2012 158 321
- US-A1- 2014 373 622

## Description

### BACKGROUND OF THE INVENTION

### 1. Field of the Invention

The present invention relates to sensor systems, in particular to fuel sensor systems.

### 2. Description of Related Art

Traditional fuel sensor systems may use liquid height sensors, densitometers, and other sensor probes to determine height and overall quantity of fuel in the fuel storage. Additionally, other fuel properties, such as temperature, can also be measured. In some measurement applications, for instance, knowledge of fuel level and quantity is needed to support, for example, automatic shutoff during refueling, independent low level warnings, and/or transfers between fuel storage vessels. EP2982943A2, EP0386965A1, US2014/373622A1, US4,677,305 and US2012/158321A1 disclose various sensor systems for measuring a level in a tank.

Such conventional methods and systems have generally been considered satisfactory for their intended purpose. However, there is still a need in the art for systems and methods that allow for improved fuel sensing systems, for example, systems in flammable environments. The present invention provides a solution for these problems.

### SUMMARY OF THE INVENTION

A sensor system is provided as claimed in claim 1 and includes a sensor operatively connected to a liquid storage vessel. An electronics unit is operatively connected to the sensor. The electronics unit includes a power source for providing electrical excitation to the sensor. An antenna is operatively connected to the electronics unit to receive data there from and to provide power to the power source. The antenna is wirelessly connected to a remote processing unit outside of the liquid storage vessel to transmit data thereto and to receive power there from via RF signals outside of the liquid storage vessel.

The system includes an optical cable within the interior of the liquid storage vessel connecting the electronics unit to the sensor to transmit power to the sensor and data from the sensor to the electronics unit, an excitation module is operatively connected to the sensor between the sensor and the optical cable; and the antenna is configured to be at least partially outside of the liquid storage vessel.

In accordance with some embodiments, the sensor is at least partially disposed in the liquid storage vessel and exposed to liquid. The sensor can be an inductance sensor, e.g. a densitometer, a resistance sensor, e.g. a temperature sensor, and/or a capacitance sensor, e.g. a fluid height sensor. The sensor can be one of a plurality of sensors, wherein the plurality of sensors can include at least one of an inductance sensor, a capacitance sensor, or a resistance sensor. The remote processing unit can be operatively connected to one or more additional antennas configured to transmit and receive wireless signals to and from the antenna. The power source can include a battery operatively connected to the antenna to store power received from the antenna.

In accordance with another aspect, a method for sensing characteristics of a liquid in a liquid storage vessel is provided as claimed in claim 7 and includes providing electrical power to an electronics unit through an antenna. The electronics unit is operatively connected to a sensor. The method includes transmitting data from the sensor to the electronics unit. The method includes wirelessly transmitting the data from the electronics unit to a remote processing unit outside of the liquid storage vessel with the antenna. The antenna is at least partially disposed outside of a liquid storage vessel. The method further comprises the step of transmitting electrical excitation with an optical cable within the interior of the liquid storage vessel from the electronic unit to the sensor via an excitation module, the excitation module being operatively connected to the sensor between the sensor and the optical cable.

It is contemplated that the data can include at least one of a height, a density, or a temperature of the liquid. The sensor can be one of a plurality of sensors in a sensor network. The sensor network can include at least one of a height sensor, a densitometer or a temperature sensor. The method can include transmitting and receiving wireless signals to and from the antenna with at least one additional antenna operatively connected to the remote processing unit. The method includes the step of transmitting power with an optical cable from the electronics unit to the sensor, and can include storing power received from the antenna in a battery in the electronics unit. The method can include determining a liquid quantity in the liquid storage vessel based on the data transmitted to the remote processing unit. The data can include at least one of a height, a density, or a temperature of the liquid.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a schematic depiction of a sensor system constructed in accordance with an embodiment of the present disclosure and some examples outside of the scope of the present invention;
Fig. 2 is a flow chart schematically depicting a method for sensing characteristics of a liquid in a liquid storage vessel using the sensor system of Fig. 1 in accordance with an embodiment of the present disclosure; and
Fig. 3 is a schematic depiction of another embodiment of a sensor system constructed in accordance with an embodiment of the present disclosure and some examples outside of the scope of the present invention, showing the electronics unit with antennas that penetrate directly into the liquid storage vessel.

### DETAILED DESCRIPTION OF THE PREFERRED EMBODIMENTS

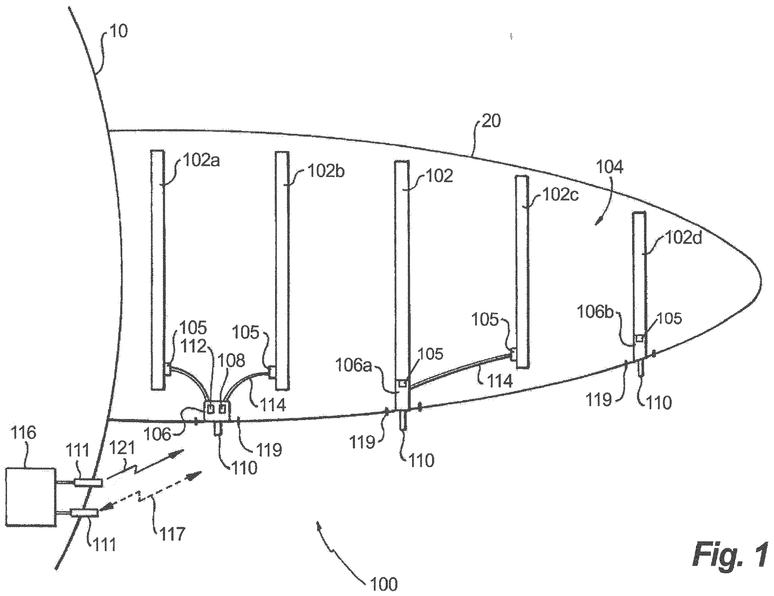

Reference will now be made to the drawings wherein like reference numerals identify similar structural features or aspects of the subject disclosure. For purposes of explanation and illustration, and not limitation, a schematic depiction of an exemplary embodiment of a sensor system in accordance with the disclosure is shown in Fig. 1 and is designated generally by reference character 102, 102a, 102b and 102c, whereas 102d is an example outside of the scope of the present invention.

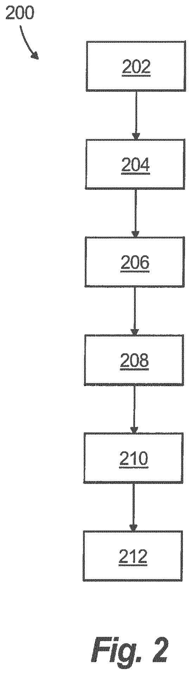

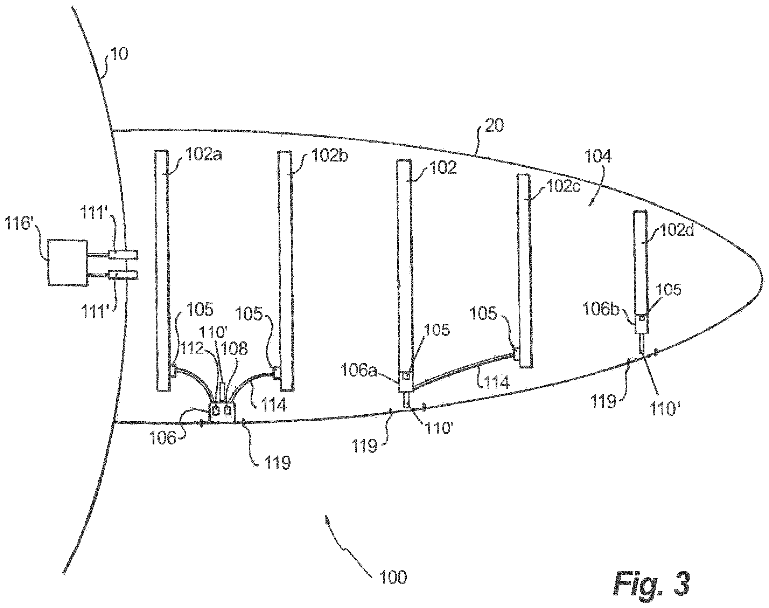

Another embodiment of the liquid level detection system in accordance with the disclosure as provided in Figure 2 and an example outside of the scope of the present invention as provided in Figure 3 are also described.

Embodiments of the present invention use wireless radio-frequency (RF) signals, instead of traditional wire harnesses, to remove means by which an electrical fault or external condition like lightning could couple onto electrical conductors, e.g. those found in traditional wire harness systems.

As shown in Fig. 1, a sensor system 100 is shown on a wing 20 of an aircraft 10. System 100 includes sensors 102 at least partially disposed in a liquid storage vessel 104 and exposed to a liquid. In some examples not part of the invention, sensors may not need to be disposed within liquid storage vessel, e.g. they might only need to be operatively connected to the outside of liquid storage vessel. Liquid storage vessel 104 is within wing 20. It is contemplated that sensors 102 can include an inductance sensor, e.g. a densitometer, a resistance sensor, e.g. a temperature sensor, or a capacitance sensor, e.g. a fluid height sensor, a dielectric properties sensor, or a conductivity sensor. Where sensors 102 are fluid height sensors, they can be capacitive based height sensors placed strategically throughout the vessel 104, dependent on vessel geometry. The fluid heights measured at each location, in conjunction with other fuel characteristics (such as density) can be used together to determine the overall quantity of fuel in vessel 104 by weight. It is also contemplated that the fuel dielectric can be used to adjust height, and fuel conductivity can be used to determine levels of fuel contamination.

With continued reference to Fig. 1, an electronics unit 106 is operatively connected to each sensor 102. In accordance with some embodiments, electronics unit 106 is remote from and connected through an optical cable 114 to a plurality of sensors, e.g. as shown with sensors 102a and 102b. Optical cable 114 connects electronics unit 106 to sensors 102a and 102b to transmit electrical excitation to sensors 102a and 102b and data from sensors 102a and 102b to electronics unit 106. System 100 includes an excitation module 105 operatively connected to each of sensors 102a and 102b between sensors 102a and 102b and optical cable 114. Excitation module 105 is the primary source of RF energy and communication with associated system equipment, e.g. electronics unit 106. Just as electronics unit 106 can be standalone or actually integrated with sensors 102, excitation module 105 can similarly be integrated with electronics unit 106, e.g. as shown in electronics units 106a and 106b.

In accordance with another embodiment, electronics unit 106 is directly connected to a respective one of sensors 102 as a module, for example, such as sensors 102 and 102d , the latter being an example outside of the scope of the present invention, and their respective electronics units 106a and 106b. It is contemplated that more than one of the sensor-electronics unit arrangements described above can be used in the same system 100. Electronics unit 106, and/or sensor 102 with electronics unit 106 can be directly attached as a module and located on the aircraft skin, for example, close to an access door 119, eliminating or reducing the need for entry into vessel 104 to facilitate maintenance. Yet if no optical cable within the interior of the liquid storage vessel connecting the electronics unit to the sensor is present on said module, this case would correspond to an example outside of the scope of the present invention.

With continued reference to Fig. 1, each electronics unit 106 includes a power source 108 for providing power to sensor 102. System 100 includes antennas 110 operatively connected to each electronics unit 106 to receive data there from and to provide power to each of power sources 108. Power source 108 includes a battery 112 operatively connected to antenna 110 to store power received from antenna 110. Antennas 110 are at least partially outside of liquid vessel 104 in order to effectively transmit and receive RF signals. While system 100 is shown with a plurality of antennas 110, it is contemplated that a single antenna 110 can be used for all sensors 102, e.g. similar to the arrangement between sensors 102a and 102b.

Antennas 110 are wirelessly connected to a remote processing unit 116, e.g. a signal conditioner. Remote processing unit 116 is located in the fuselage of aircraft 10. Antennas 110 transmit data through RF signals to remote processing unit 116, shown schematically by the double headed arrow 117, and receive power, in the form of RF signals, shown schematically by the single headed arrow 119, from remote processing unit 116. Remote processing unit 116 is operatively connected to additional antennas 111 for transmitting and receiving wireless RF signals to and from antenna 110 of liquid storage vessel 104. It is contemplated that transmit/receive antennas 111 can be within unit 116, external to unit 116 and installed on the exterior skin of aircraft 10.

In accordance with an example outside of the scope of the present invention as shown in Fig. 3, a remote processing unit 116' is located in the fuselage of aircraft 10 such that additional antennas 111' directly penetrate liquid storage vessel 104. Antennas 111' and processing unit 116' are similar to antennas 111 and processing unit 116, described above and shown in Fig. 1. Where antennas 111' penetrate directly into liquid storage vessel 104, it is contemplated that antennas 110' can be used. Antennas 110' are similar to antennas 110, except that antennas 110' do not penetrate outside of liquid storage vessel 104. The method described below can be used with the embodiments shown in Figs. 1 or 3.

As shown in Fig. 2, a method 200 for sensing characteristics of a liquid in a liquid storage vessel, e.g. liquid storage vessel 104, includes providing electrical power to an electronics unit, e.g. at least one of electronics units 106, through an antenna, e.g. at least one of antennas 110 or 110', as shown by box 202. In this embodiment, a remote processing unit, e.g. a signal conditioner or remote processing unit 116 or 116', transmits RF energy to the antenna that is operatively connected to the electronics unit located on or within the vessel. It is contemplated that method 200 includes storing power received from the antenna in a battery, e.g. battery 112, in the electronics unit, as indicated by box 204. Method 200 includes transmitting power from the electronics unit to the sensor, as indicated schematically by box 206. Electronics unit and/or battery are configured to store sufficient RF energy to enable acquisition of the fluid characteristic with the sensor and RF transmission of the information back to the processing unit. In accordance with the embodiments of the invention, transmitting power from the electronics unit to the sensor power includes transmitting the power with an optical cable, e.g. optical cable 114. Method 200 includes reading at least one of a height sensor, a temperature sensor or a density sensor, e.g. at least one of sensors 102, with the electronics unit, as indicated schematically by box 208. In accordance with the embodiments of the invention, reading the sensors includes transmitting data through the optical cable to the electronics unit.

With continued reference to Fig. 2, method 200 includes wirelessly transmitting data from the electronics unit to a remote processing unit, e.g. remote processing unit 116, with the antenna, as indicated schematically by box 210. Transmitting and receiving wireless signals to and from the antenna includes transmitting and receiving wireless signals to and from an additional antenna, e.g. antenna 111 or 111', operatively connected to the remote processing unit. Method 200 includes sensing a characteristic of liquid in the liquid storage vessel based on the data transmitted to the remote processing unit, as indicated by box 212, for example, determining a liquid level in the liquid storage vessel.

The methods and systems of the present disclosure, as described above and shown in the drawings, provide for sensor systems and methods with superior properties including electrical isolation, reduced power requirement and ease of installation. While the apparatus and methods of the subject disclosure have been shown and described with reference to preferred embodiments, those skilled in the art will readily appreciate that changes and/or modifications may be made thereto without departing from the scope of the subject disclosure as defined by the appended claims.

## Claims

1. A sensor system (100) comprising:
a sensor (102) operatively connected to a liquid storage vessel (104);
an electronics unit (106) operatively connected to the sensor, wherein the electronics unit includes a power source configured to provide electrical excitation to the sensor;
an antenna (110) operatively connected to the electronics unit to receive data there from and to provide power to the power source, wherein the antenna is wirelessly connected to a remote processing unit (116) outside of the liquid storage vessel to transmit data thereto and to receive power there from via RF signals outside of the liquid storage vessel; an excitation module (105) operatively connected to the sensor (102) between the sensor (102) and an optical cable (114); **characterised by** the optical cable (114) within the interior of the liquid storage vessel connecting the electronics unit (106) to the sensor (102) to transmit power to the sensor and data from the sensor to the electronics unit via the excitation module (105); and
wherein the antenna (110) is configured to be at least partially outside of the liquid storage vessel (104).

2. The sensor system as recited in claim 1, wherein the sensor (102) is at least partially disposed in the liquid storage vessel and exposed to liquid.

3. The sensor system as recited in claim 1 or 2, wherein the sensor (102) is at least one of an inductance sensor, a resistance sensor, or a capacitance sensor.

4. The sensor system as recited in any preceding claim, wherein the sensor (102) is one of a plurality of sensors, wherein the plurality of sensors include at least one of an inductance sensor, a resistance sensor, or a capacitance sensor.

5. The sensor system as recited in any preceding claim, wherein the remote processing unit (116) is operatively connected to one or more additional antennas configured to transmit and receive wireless signals to and from the antenna (110) at least partially disposed outside of the liquid storage vessel (104).

6. The sensor system as recited in any preceding claim, wherein the power source (108) includes a battery (112) operatively connected to the antenna (110) to store power received from the antenna.

7. A method for sensing characteristics of a liquid comprising:
providing electrical power to an electronics unit (106) via RF signals outside of a liquid storage vessel through an antenna (110), wherein the electronics unit (106) is operatively connected to a sensor (102);
transmitting data from the sensor (102) to the electronics unit (106); and wirelessly transmitting the data from the electronics unit (106) to a remote processing unit (116) outside of the liquid storage vessel with the antenna (110), and **characterized by** further comprising the step of transmitting electrical excitation with an optical cable (114) within the interior of the liquid storage vessel from the electronics unit (106) to the sensor (102) via an excitation module (105) wherein the excitation module (105) is operatively connected to the sensor (102) between the sensor (102) and the optical cable (114); and
wherein the antenna (110) is configured to be at least partially outside of the liquid storage vessel (104).

8. The method as recited in claim 7, wherein the data includes at least one of a height, a density, or a temperature of the liquid.

9. The method as recited in claim 7 or 8, further comprising determining a quantity of liquid in the liquid storage vessel (104) based on the data transmitted to the remote processing unit (116).

10. The method as recited in claim 7, 8 or 9, wherein the sensor (102) is one of a plurality of sensors in a sensor network, wherein the sensor network includes at least one of a height sensor, a densitometer, or a temperature sensor.

11. The method as recited in any of claims 7 to 10, further comprising transmitting and receiving wireless signals to and from the antenna (110) with at least one additional antenna (110) operatively connected to the remote processing unit (116).

12. The method as recited in any of claims 7 to 11, further comprising storing power received from the antenna in a battery in the electronics unit (106).

## Patentansprüche

1. Sensorsystem (100), umfassend:
einen Sensor (102), der wirksam mit einem Flüssigkeitsspeicherbehälter (104) verbunden ist;
eine Elektronikeinheit (106), die wirksam mit dem Sensor verbunden ist, wobei die Elektronikeinheit eine Stromquelle beinhaltet, die so konfiguriert ist, dass sie dem Sensor eine elektrische Anregung bereitstellt;
eine Antenne (110), die wirksam mit der Elektronikeinheit verbunden ist, um Daten davon zu empfangen und der Stromquelle Energie bereitzustellen, wobei die Antenne drahtlos mit einer Fernverarbeitungseinheit (116) verbunden ist, die sich außerhalb des Flüssigkeitsspeicherbehälters befindet, um Daten an diese zu übermitteln und Energie davon über HF-Signale außerhalb des Flüssigkeitsspeicherbehälters zu empfangen; ein Anregungsmodul (105), das wirksam mit dem Sensor (102) verbunden ist und zwischen dem Sensor (102) und einem optischen Kabel (114) liegt; **dadurch gekennzeichnet, dass** das optische Kabel (114) innerhalb des Inneren des Flüssigkeitsspeicherbehälters die Elektronikeinheit (106) mit dem Sensor (102) verbindet, um Energie an den Sensor und Daten von dem Sensor zur Elektronikeinheit über das Anregungsmodul (105) zu übertragen; und
wobei die Antenne (110) so konfiguriert ist, dass sie mindestens teilweise außerhalb des Flüssigkeitsspeicherbehälters (104) liegt.

2. Sensorsystem nach Anspruch 1, wobei der Sensor (102) mindestens teilweise in dem Flüssigkeitsspeicherbehälter angeordnet ist und der Flüssigkeit ausgesetzt ist.

3. Sensorsystem nach Anspruch 1 oder 2, wobei der Sensor (102) mindestens eines aus einem induktiven Sensor, einem Widerstandssensor oder einem kapazitiven Sensor ist.

4. Sensorsystem nach einem der vorstehenden Ansprüche, wobei der Sensor (102) einer aus einer Vielzahl von Sensoren ist, wobei die Vielzahl von Sensoren mindestens einen aus einem induktiven Sensor, einem Widerstandssensor oder einem kapazitiven Sensor beinhalten.

5. Sensorsystem nach einem der vorstehenden Ansprüche, wobei die Fernverarbeitungseinheit (116) wirksam mit einer oder mehreren zusätzlichen Antennen verbunden ist, die so konfiguriert sind, dass sie drahtlose Signal an die Antenne (110) übertragen und von dieser empfangen, die mindestens teilweise außerhalb des Flüssigkeitsspeicherbehälters (104) angeordnet ist.

6. Sensorsystem nach einem der vorstehenden Ansprüche, wobei die Stromquelle (108) eine Batterie (112) beinhaltet, die wirksam mit der Antenne (110) verbunden ist, um Energie zu speichern, die von der Antenne empfangen wird.

7. Verfahren zum Erfassen von Eigenschaften einer Flüssigkeit, umfassend:
Bereitstellen von elektrischer Energie für eine Elektronikeinheit (106) über HF-Signale außerhalb eines Flüssigkeitsspeicherbehälters durch eine Antenne (110), wobei die Elektronikeinheit (106) wirksam mit einem Sensor (102) verbunden ist; Übertragen von Daten von dem Sensor (102) zur Elektronikeinheit (106); und
drahtloses Übertragen der Daten von der Elektronikeinheit (106) an eine Fernverarbeitungseinheit (116) außerhalb des Flüssigkeitsspeicherbehälters mit der Antenne (110), und **dadurch gekennzeichnet, dass** sie ferner den Schritt des Übertragens elektrischer Anregung mit einem optischen Kabel (114) innerhalb des Inneren des Flüssigkeitsspeicherbehälters von der Elektronikeinheit (106) zum Sensor (102) über ein Anregungsmodul (105) umfasst, wobei das Anregungsmodul (105) wirksam mit dem Sensor (102) verbunden ist und zwischen dem Sensor (102) und dem optischen Kabel (114) liegt; und
wobei die Antenne (110) so konfiguriert ist, dass sie mindestens teilweise außerhalb des Flüssigkeitsspeicherbehälters (104) liegt.

8. Verfahren nach Anspruch 7, wobei die Daten mindestens eines aus einer Höhe, einer Dichte oder einer Temperatur der Flüssigkeit beinhalten.

9. Verfahren nach Anspruch 7 oder 8, ferner umfassend das Ermitteln einer Menge an Flüssigkeit in dem Flüssigkeitsspeicherbehälter (104) basierend auf den Daten, die an die Fernverarbeitungseinheit (116) übermittelt werden.

10. Verfahren nach Anspruch 7, 8 oder 9, wobei der Sensor (102) einer aus einer Vielzahl von Sensoren in einem Sensornetzwerk ist, wobei das Sensornetzwerk mindestens eines aus einem Höhensensor, einem Densitometer oder einem Temperatursensor beinhaltet.

11. Verfahren nach einem der Ansprüche 7 bis 10, ferner umfassend das Übertragen und Empfangen von drahtlosen Signalen an und von der Antenne (110), wobei mindestens eine zusätzliche Antenne (110) wirksam mit der Fernverarbeitungseinheit (116) verbunden ist.

12. Verfahren nach einem der Ansprüche 7 bis 11, ferner umfassend das Speichern von Energie, die von der Antenne empfangen wird, in einer Batterie in der Elektronikeinheit (106).

## Revendications

1. Système de capteurs (100) comprenant :
un capteur (102) connecté de manière opérationnelle à un récipient de stockage de liquide (104) ;
une unité électronique (106) connectée de manière opérationnelle au capteur, dans lequel l'unité électronique comporte une source d'alimentation conçue pour fournir une excitation électrique au capteur ;
une antenne (110) connectée de manière opérationnelle à l'unité électronique pour recevoir des données à partir de celle-ci et pour fournir de l'énergie à la source d'alimentation, dans lequel l'antenne est connectée sans fil à une unité de traitement à distance (116) à l'extérieur du récipient de stockage de liquide pour transmettre des données à celle-ci et pour recevoir de l'énergie de celle-ci via des signaux RF à l'extérieur du récipient de stockage de liquide ; un module d'excitation (105) connecté de manière opérationnelle au capteur (102) entre le capteur (102) et un câble optique (114) ; **caractérisé en ce que** le câble optique est à l'intérieur du récipient de stockage de liquide connectant l'unité électronique (106) au capteur (102) pour transmettre de l'énergie au capteur et les données du capteur à l'unité électronique via le module d'excitation (105) ;
dans lequel l'antenne (110) est conçue pour être au moins partiellement à l'extérieur du récipient de stockage de liquide (104) .

2. Système de capteurs selon la revendication 1, dans lequel le capteur (102) est au moins partiellement disposé dans le récipient de stockage de liquide et exposé au liquide.

3. Système de capteurs selon la revendication 1 ou 2, dans lequel le capteur (102) est au moins l'un d'un capteur d'inductance, d'un capteur de résistance ou d'un capteur de capacité.

4. Système de capteurs selon une quelconque revendication précédente, dans lequel le capteur (102) est l'un d'une pluralité de capteurs, dans lequel la pluralité de capteurs comporte au moins l'un d'un capteur d'inductance, d'un capteur de résistance ou d'un capteur de capacité.

5. Système de capteur selon une quelconque revendication précédente, dans lequel l'unité de traitement à distance (116) est connectée de manière opérationnelle à une ou à plusieurs antennes supplémentaires conçues pour transmettre et recevoir des signaux sans fil vers et depuis l'antenne (110) au moins partiellement disposée à l'extérieur du récipient de stockage de liquide (104).

6. Système de capteur selon une quelconque revendication précédente, dans lequel la source d'alimentation (108) comporte une batterie (112) connectée de manière opérationnelle à l'antenne (110) pour stocker l'énergie reçue de l'antenne.

7. Procédé de détection de caractéristiques d'un liquide comprenant :
la fourniture d'énergie électrique à une unité électronique (106) via des signaux RF à l'extérieur d'un récipient de stockage de liquide à travers une antenne (110), dans lequel l'unité électronique (106) est connectée de manière opérationnelle à un capteur (102) ;
la transmission de données du capteur (102) à l'unité électronique (106) ; et
la transmission sans fil des données de l'unité électronique (106) à une unité de traitement à distance (116) à l'extérieur du récipient de stockage de liquide avec l'antenne (110), et **caractérisé en ce qu'**il comprend en outre l'étape de transmission d'une excitation électrique avec un câble optique (114) à l'intérieur du récipient de stockage de liquide de l'unité électronique (106) au capteur (102) via un module d'excitation (105), dans lequel le module d'excitation (105) est connecté de manière opérationnelle au capteur (102) entre le capteur (102) et le câble optique (114) ; et
dans lequel l'antenne (110) est conçue pour être au moins partiellement à l'extérieur du récipient de stockage de liquide (104) .

8. Procédé selon la revendication 7, dans lequel les données comportent au moins l'une d'une hauteur, d'une densité ou d'une température du liquide.

9. Procédé selon la revendication 7 ou 8, comprenant en outre la détermination d'une quantité de liquide dans le récipient de stockage de liquide (104) sur la base des données transmises à l'unité de traitement à distance (116).

10. Procédé selon la revendication 7, 8 ou 9, dans lequel le capteur (102) est l'un d'une pluralité de capteurs dans un réseau de capteurs, dans lequel le réseau de capteurs comporte au moins l'un d'un capteur de hauteur, d'un densitomètre ou d'un capteur de température.

11. Procédé selon l'une quelconque des revendications 7 à 10, comprenant en outre la transmission et la réception de signaux sans fil vers et depuis l'antenne (110) avec au moins une antenne supplémentaire (110) connectée de manière opérationnelle à l'unité de traitement à distance (116).

12. Procédé selon l'une quelconque des revendications 7 à 11, comprenant en outre le stockage de l'énergie reçue en provenance de l'antenne dans une batterie dans l'unité électronique (106).
